# EUROPÄISCHE PATENTSCHRIFT

(11) **EP 2 327 940 B1**
(45) Veröffentlichungstag und Bekanntmachung des Hinweises auf die Patenterteilung: **05.10.2011**
(21) Anmeldenummer: 10075321.9
(22) Anmeldetag: 23.07.2010
(51) Int. Cl.: F24J 2/10, H01L 31/052, H01L 31/042, F24J 2/16, F24J 2/52

(54) **Photovoltaikanlage mit Reflektorelementen**
Photovoltaic facility with reflector elements
Installation photovoltaïque dotée d'éléments de réflexion

(30) Priorität: 30.10.2009 DE 102009051766
(43) Veröffentlichungstag der Anmeldung: 01.06.2011
(73) Patentinhaber: SOLON SE, 12489 Berlin (DE)
(72) Erfinder: Schwarze, Sascha Oliver, 12277 Berlin (DE)

(56) Entgegenhaltungen:
- DE-A1- 2 819 901
- DE-U1-202006 020 180
- FR-A1- 2 511 130
- US-A- 4 162 595
- US-A- 4 933 020
- US-A1- 2003 201 007
- US-A1- 2010 038 507
- US-B1- 6 188 012

## Beschreibung

Die Erfindung bezieht sich auf eine Photovoltaikanlage mit länglichen Solarpaneelen, die mittels Montageschienen auf einem im wesentlichen horizontal ausgerichteten Flachsubstrat unter einem Anstellwinkel und in parallelen Reihen mit einem Abstand zueinander angeordnet sind, und mit zwischen den Reihen der Solarpaneele rückseitig angeordneten länglichen Reflektorelementen mit einer Verbindung der Oberkante des Reflektorelements mit der Oberkante des Solarpaneels und der Unterkante des Reflektorelements mit der Unterkante des Solarpaneels.

Leichtgewichtige Flachdächer als horizontale Flachsubstrate können zur Sonne optimal ausgerichtete Standard-Solarmodule wegen fehlender Lastreserven in der Regel nicht mehr tragen, sodass diese Flächen oft solartechnisch gar nicht oder nur mit flachliegenden und damit ertragsgeminderten Solarmodulen genutzt werden. Um die einwirkenden Lasten auf geneigt angeordnete Solarmodule möglichst gering zu halten, können diese in ihrer Höhe so klein gebaut werden, wie es technisch und wirtschaftlich noch sinnvoll ist. So kann beispielsweise nur noch ein Solarzellen-String zu einem länglichen Solarmodul verschaltet werden. Bei gleicher installierter elektrischer Leistung wird durch das parallele Aufstellen von vielen Einstring-Solarmodulen mit geringen Flächenlasten gegenüber Standard-Solarmodulen mit hoher örtlicher Flächenlast diese gleichmäßiger auf dem Flachdach verteilt. Aber auch wenige Solarzellenreihen nebeneinander ("Mehrstring-Solarmodul" im Gegensatz zu "Vielstring-Solarmodul") ergeben immer noch sehr schmale, längliche Solarmodule mit einem großen Aspektverhältnis, das heißt mit einer großen Länge gegenüber ihrer Höhe ("brettförmige" Ausgestaltung). Derartige Solarmodule bzw. Solarpaneele werden im vorliegenden Zusammenhang mit "länglich" bezeichnet. Solarmodule können Solarzellen auf Glasscheiben in konstruktiven Rahmen oder auch in Kunststoff eingegossene "laminierte" Solarzellen aufweisen. Solarmodule mit einlaminierten Solarzellen können auch als "Solarpaneele" bezeichnet werden und sind relativ dünn und oftmals biegsam.

### STAND DER TECHNIK

Reflektoren in Photovoltaiksystemen dienen der verbesserten Ausbeute von eingestrahltem Sonnenlicht durch Rückstreuung auf die Solarzellen. Dabei können beispielsweise die Reflektoren unterhalb der Solarzellen im Modul angeordnet sein, sodass das reflektierte Licht an der Glasplatte des Moduls nochmals reflektiert wird, es können aber auch bifaciale Solarzellen mit zwei aktiven Oberflächen vorgesehen sein. Alternativ können auch Reihen von Solarzellen aufgebaut werden, zwischen denen sich dann Reihen von Reflektoren befinden, wobei Solarzellen und Reflektoren in einem entsprechenden Winkel zueinander angeordnet sind, sodass ein zumeist stufenförmiger Aufbau entsteht, wie er grundsätzlich aus der US 5 511 537 A oder der WO 20081016 453 A2 bekannt ist.

Aus der DE 10 2007 045 554 B3 ist ein stapelbares Flach-/Bodengestell für Solarpaneele aus einem Drahtgitter bekannt, das zwei gewinkelte Flächen aufweist. Auf die flacher gewinkelte Fläche werden dann Solarpaneele und auf die steiler gewinkelte Fläche Windleitbleche zum Niederhalten der Gestelle aufgebracht, wobei die Windleitbleche reflektierende Oberflächen aufweisen und somit als Reflektorelemente dienen können.

Aus der DE 10 2006 042 808 A1 ist eine als Solardach beschriebene Einrichtung bekannt, bei der Solarmodule und biegesteife Reflexionsflächen abwechselnd zu einer dichten Dachfläche verbunden werden, beispielsweise zur Überdachung eines Auto-Stellplatzes. Das Solardach muss auf einer geeigneten Unterkonstruktion gelagert werden, um Schnee- und Windlasten standhalten zu können. Die Reflexionsflächen sind mit den benachbarten Solarmodulen auf nicht näher beschriebene Weise verbunden. An den unteren Verbindungen können Wasserableitungen vorgesehen sein.

Aus der EP 2 075 853 A2 ist eine photovoltaische Anordnung bekannt, die abwechselnd Solarmodule und Reflexionsflächen verbindert, derart, dass die Reflexionsflächen die sonst in die Lücke zwischen den Aufstellungen der Solarmodule fallenden Sonnenstrahlen auf das nächstgelegene Solarmodul reflektieren. Die Anordnung, die für Aufstellung auf flachen Unterlagen vorgesehen ist, benötigt eine stützende Unterkonstruktion. Die Reflexionsflächen sind mit den benachbarten Solarmodulen auf nicht näher beschriebene Weise verbunden.

Aus der US 4 674 244 A ist eine Stützkonstruktion für Solarmodule bekannt, die einen dreieckigen Querschnitt aufweist, um die Solarmodule optimal auf die Sonne auszurichten. Die Stützkonstruktion ist für die Aufstellung auf ebenen Unterlagen vorgesehen und kann auf ihrer Rückseite reflektierende Folien tragen, die in die Lücke zwischen den Solarmodulen fallende Lichtstrahlen auf das nächstgelegene Solarmodul reflektieren. Die reflektierenden Flächen sind aufgeklebte Folien, eine Befestigung an den Solarmodulen selbst ist nicht vorgesehen.

Der nächstliegende Stand der Technik, von dem die vorliegende Erfindung ausgeht, wird in der EP 1 306 907 A1 offenbart. Beschrieben wird eine Photovoltaikanlage mit länglichen Solarpaneelen, die mittels Montageschienen auf einem flachen, im wesentlichen horizontal ausgerichteten Flachsubstrat unter einem Anstellwinkel und in parallelen Reihen mit einem Abstand zueinander angeordnet sind. Zwischen den Reihen aus Solarpaneelen sind eigenständige, aufwändige Rahmenkonstruktionen mit Seitenwänden und einer konkaven Fläche - wiederum vorrangig zur Verringerung von Windangriffslasten - vorgesehen. Die konkaven Flächen können eine reflektierende Oberfläche haben und sind damit auch als Reflektorelemente ausgebildet sein. Diese sind rückseitig zwischen den Reihen der Solarpaneele in der Weise angeordnet, dass jeweils die Oberkanten und die Unterkanten der Solarpaneele und Reflektorelemente miteinander verbunden sind. Dadurch ergibt sich ein geschlossener (und wenig Windangriffsfläche bietender) Aufbau, in dem die Solarpaneele von den Reflektorelementen angestrahlt und nicht verdeckt werden. Dabei erfolgt die Verbindung an den Oberkanten durch einfache Laschen, die Verbindung an den Unterkanten durch eine Leiste. Über die Festigkeit der Verbindungen wird keine weitere Aussage gemacht. Weiterhin liegen die Solarpaneele zwischen Ober- und Unterkante über die gesamte Reihenlänge vollständig hohl, sodass hier bei einer dünnen Laminatausführung ggfs. Durchbiegung auftreten kann. Die Reflektorelemente sind, wie bereits gesagt, als aufwändige Raumelemente ausgeführt.

Aus der DE 203 01 389 U1 ist weiterhin eine Solarzellenkonsole in Form einer Wanne bekannt, auf der das Solarpaneel mit Hilfe von zwei gegenüberliegenden Klauen befestigt wird. Dabei weisen die Klauen Abwinklungen zur Verbindung von Solarpaneele und Wanne auf, wobei diese aber nicht die Solarpaneele umgreifen. Weiterhin sind die gegenüberliegenden Klauen mit einem Steg verbunden, der gleichzeitig der Unterstützung der Solarpaneele dient. Somit können auch dünne, rahmenlose Laminate eingesetzt werden, ohne dass eine Durchbiegung auftritt.

Schließlich ist aus der JP 2000- 064 523 A eine Montagevorrichtung für längliche Solarmodule bekannt, die im Wesentlichen aus auf dem Flachsubstrat angeordneten Montageschienen und daran befestigten Einschubelementen aus zwei getrennten Metallwinkeln unterschiedlicher Schenkellänge besteht. Jeder Metallwinkel weist an seinem oberen Ende eine zweifache Umbiegung zum seitlichen Einschieben der Solarmodule mit ihren beiden länglichen Randbereichen auf. Die Solarmodule sind somit beidseitig eingespannt - wie alle Solarmodule zuvor - und aus dem Stand der Technik bekannt - auch. Zur Vermeidung von Beschädigungen der Solarmodule sind an diesen im Bereich der anzuordnenden Metallwinkel Bänder (ebenda Bezugszeichen 71 in Figur 7) vorgesehen, die die Solarmodule an beiden Kanten umgreifen und auf der Rückseite verlaufen. Diese Bänder sind aber elastisch ausgeführt und dienen ausschließlich der Zwischenlage zwischen den Solarpaneelen und den Metallwinkeln des Einschubelements. Reflektorelemente sind bei beiden zuletzt genannten Anordnungen nicht vorgesehen.

### AUFGABENSTELLUNG

Ausgehend von dem oben beschriebenen nächstliegenden Stand der Technik ist die **AUFGABE** für die vorliegende Erfindung darin zu sehen, ein gattungsgemäßes Photovoltaiksystem der eingangs beschriebenen Art anzugeben, bei dem eine einfache und leichte Montage der länglichen Solarpaneele möglich ist. Weiterhin soll auch eine besonders einfache, aber trotzdem windsichere Art und Befestigung der Reflektorelemente umgesetzt werden. Dabei sollen die Reflektorelemente selbst möglich einfach ausgeführt, aber trotzdem effektiv in ihrer Reflexionswirkung sein. In beiden Fällen sollen dabei jedoch die Solarpaneele ohne eine Beeinträchtigung ihrer wirksamen Fläche wirksam vor Durchbiegungen geschützt sein. Die erfindungsgemäße **LÖSUNG** für diese Aufgabe ist dem Hauptanspruch zu entnehmen. Vorteilhafte Weiterbildungen der Erfindung werden in den Unteransprüchen aufgezeigt und im Folgenden im Zusammenhang mit der Erfindung näher erläutert.

Das erfindungsgemäße Photovoltaiksystem ist gekennzeichnet zum einen durch eine ausschließlich einseitige Lagerung der Solarpaneele im Bereich ihrer Unterkanten auf den Montageschienen auf dem Flachsubstrat. Zum anderen ist die Erfindung gekennzeichnet durch biegesteife Reflektorklemmleisten, die der Befestigung der Reflektorelemente, vor allem aber auch der Stabilisierung der Solarpaneele dienen. Dazu sind die Reflektorklemmleisten biegesteif ausgeführt und auf der Rückseite der Solarpaneele mit Abstand zueinander zwischen den Montageschienen angeordnet, sodass sie die Montage der Solarpaneele nicht behindern. Zur Aufnahme der Solarpaneele weisen die Reflektorklemmleisten obere und untere doppelte Abwinklungen auf, mit deren Vorderschenkeln sie jeweils die Solarpaneele an deren beiden Längskanten umgreifen. Die Reflektorelemente selbst sind als einfache, dünne Reflektorblätter ausgeführt. Durch die einseitige Lagerung der Solarpaneele sind diese wesentlich einfacher zu montieren und auch besser zugänglich als bekannte Solarpaneele, was insbesondere für eine einfache Befestigung der Reflektorelemente von Vorteil ist. Bei einer einseitigen Einspannung haben die Solarpaneele aber nicht die Stabilität wie bei einer beidseitigen Einspannung, insbesondere die Oberkante der Solarpaneele ist ungestützt. Befestigungen von Reflektorelementen mit einem ausschließlichen Abstützen auf der Oberkante der Solarpaneele würden also zu einer unerwünschten Durchbiegung führen. Deshalb sind bei der Erfindung die biegesteifen Reflektorklemmleisten vorgesehen, die die Solarpaneele, bei der es sich bevorzugt um rahmenlose PV-Laminate handeln kann, von der Rückseite her an Ober- und Unterkante umgreifen. Durch den vertikalen Verlauf der biegesteifen Reflektorklemmleisten und durch deren benachbarte Anordnung über die gesamte längliche Erstreckung der Solarpaneele werden diese bei der Erfindung äußerst einfach, aber auch äußerst effektiv stabilisiert und vor Durchbiegung geschützt. Dadurch wird der Stabilitätsverlust durch die einseitige Einspannung, der bei länglichen Solarpaneelen jedoch nicht besonders groß ist, kompensiert. Es entsteht ein äußerst stabiler Verbund aus Solarpaneelen und biegesteifen Reflektorklemmleisten, der auch größeren Windangriffslasten problemlos standhält. Dabei sind die biegesteifen Reflektorklemmleisten zwischen den Montageschienen vorgesehen und stören damit nicht die Einspannungen der Solarpaneele im Bereich ihrer Unterkante. Die Reflektorelemente dienen der Befestigung der Reflektorelemente, die besonders einfach als dünnes Reflektorblatt (engl. "sheet") ausgeführt sind. Räumliche Konstruktionen entfallen. Die Anordnung und feste Verbindung der Reflektorblätter wird ausschließlich durch ihre Befestigung an der Oberkante des einen Solarpaneels und an der Unterkante des dahinter liegenden Solarpaneels in der nächsten Reihe erreicht.

Zur guten Stabilisierung der Solarpaneele und zur sichereren Befestigung der Reflektorblätter sind erfindungsgemäß mehrere biegesteife Reflektorklemmleisten über die Längserstreckung der Solarpaneele vorgesehen. Um einen konstanten Abstand zwischen den biegesteifen Reflektorklemmleisten und deren seitliches Verrutschen sicher zu verhindern, ist es darüber hinaus vorteilhaft, wenn ein auf der Rückseite der Solarpaneele parallel zu dessen Ober- und Unterkante angeordnetes Verbindungselement vorgesehen ist, das alle biegesteifen Reflektorklemmleisten auf der Rückseite eines Solarpaneels miteinander verbindet. Hierbei kann es sich beispielsweise um eine einfache Leiste handeln, die doppelte Klemmrasten im Bereich der biegesteifen Reflektorklemmleisten aufweist. Eine einfache Verbindung durch Kleben oder andere einfache Verbindungstechniken ist ebenfalls möglich.

Die biegesteifen Reflektorklemmleisten dienen bei der Erfindung in einem besonderen Maße der Stabilisierung der einseitig eingespannten Solarpaneele. Zur sicheren Verbindung mit diesen umfassen die biegesteifen Reflektorklemmleisten die Solarpaneele mit den Vorderschenkeln von oberen und unteren doppelten Abwinklungen. Die Solarpaneele stecken also in den doppelten Abwinklungen wie in Führungsnuten. Die Montage der biegesteifen Reflektorklemmleisten erfolgt in einfacher Weise durch einfaches Aufschieben von den schmalen Seiten der Solarpaneele her oder durch Anpassen über eine Längenverstellung (siehe unten). Damit die Vorderschenkel der Reflektorklemmleisten unter Windangriff nicht abgebogen und die Führung der Solarpaneele aufgeweitet wird, ist es vorteilhaft, wenn die biegesteifen Reflektorklemmleiste zumindest im Bereich der unteren Abwinklung eine Rippenverstärkung aufweist. Hierbei kann es sich beispielsweise um eine einzelne, mittig angeordnete und radial ausgerichtete Rippe handeln.

Eine Ausbildung der biegesteifen Reflektorklemmleisten aus einem Kunststoff, beispielsweise einem Hartkunststoff, kann die Montage auf dem Solarpaneel vereinfachen, wenn die biegesteifen Reflektorklemmleisten seitlich auf die Solarpaneele aufgeschoben werden. Alternativ können die biegesteifen Reflektorklemmleisten auch eine starre Längeneinstellung aufweisen. In verlängerter Position werden sie dann über das Solarpaneel geschoben und nehmen dieses dann nach dem Zusammenschieben in verkürzter Position in ihren oberen und unteren Abwinklungen auf. Zur besseren und losefreien Festlegung der Solarpaneele im Inneren der biegesteifen Reflektorklemmleisten können weiterhin bevorzugt Klemmlippen innerhalb der unteren und/oder oberen doppelten Abwinklung der Reflektorklemmleisten vorgesehen sein. Diese Ausführungsform ist bevorzugt in Verbindung mit einer Ausführung der biegesteifen Reflektorklemmleisten aus Kunststoff zu sehen, sodass die Klemmlippen die erforderliche Flexibilität mitbringen.

Die Reflektorelemente sind bei der Erfindung als einfache dünne Reflektorblätter ausgeführt. Bevorzugt kann es sich dabei um dünne Bleche aus einem Metall oder um Platten oder Folien aus einem Kunststoff handeln. Alle Reflektorblätter weisen in ihrer Funktion als Reflektoren eine reflektierende Oberfläche auf. Dabei kann die natürliche Reflektivität des verwendeten Materials oder eines zusätzliche reflektierende Beschichtung genutzt werden. Bei der Verwendung eines Bleches als Reflektorblatt kann dieses einfache Abwinklungen an Ober- und Unterkante aufweisen. Mit der Unterkante wird das Blech einfach zwischen die biegesteife Reflektorklemmleiste und das Solarpeneel geschoben und dort eingeklemmt. Mit der abgewinkelten Oberkante wird das Blech dann einfach über die Oberkante des Solarpaneels gelegt und ggfs. dort fixiert. Es können aber auch an der biegesteifen Reflektorklemmleiste spezielle Mittel zur Aufnahme der Reflektorblätter vorgesehen sein. Dabei kann es sich bevorzugt um eine erste Aufnahmenut in der Stirnseite des Vorderschenkels der unteren Abwinklung zur Aufnahme der Unterkante des Reflektorblatts handeln. In diese Aufnahmenut wird die Abwinklung des Reflektorblatts, die ggfs. noch einmal umgefalzt ist, einfach eingeschoben. Weiterhin kann eine innere Abschrägung des Vorderschenkels der oberen Abwinklung zur Aufnahme der abgewinkelten Oberkante des Reflektorblatts vorgesehen sein. Dazu ist das Reflektorblatt bevorzugt zweimal winklig umgefalzt und rastet beim Überschieben einfach hinter die Abschrägung. Alternativ kann sich auch eine zweite Aufnahmenut auf der Rückseite der biegesteifen Reflektorklemmleiste im Bereich ihrer oberen Abwinklung zur Aufnahme der Oberkante des Reflektorblatts befinden. Das Reflektorblatt kann beispielsweise eine Verdickung an seiner Oberkante aufweisen, mit der es dann in die Aufnahmenut einrastet.

Wesentlicher Vorteil des Photovoltaiksystems nach der Erfindung ist die einseitige Einspannung der Solarpaneele nur im Bereich ihrer Unterkanten, wodurch die Solarpaneele besser montierbar und zugänglich sind. Eine Stabilisierung der einseitig eingespannten Solarpaneele gegen Durchbiegung wird erfindungsgemäß durch die biegesteifen Reflektorklemmleisten erreicht. Vorteilhaft kann die einseitige Halterung der Solarpaneele in Einschubelementen erfolgen, die in den Montageschienen befestigt sind. Hierbei kann bevorzugt eine Ausbildung des Einschubelements als kompaktes, einstückiges Formelement mit einer geschlossenen Oberfläche vorgesehen sein. Dabei ist die geschlossene Oberfläche nur von einem unter dem vorgegebenen Anstellwinkel über die gesamte Breite des Formelements verlaufenden Einschubschlitz unterbrochen. In diesen Einschubschlitz wird das Solarmodul mit seiner Unterkante von oben eingeschoben. Fixiert wird das Solarmodul im Einschubschlitz dann durch ein in seiner Dicke anpassbares Montageelement aus Kunststoff ("Keil"), das ebenfalls in den Einschubschlitz von oben eingesteckt wird. Eine derartige Montagevorrichtung ist aus der älteren deutschen Patentanmeldung (Aktenzeichen DE 10 2008 037 964 A1) bekannt. Weitere konstruktive Details der Erfindung werden aus dem speziellen Ausführungsteil ersichtlich, der nachfolgend näher erläutert wird.

### AUSFÜHRUNGSBEISPIELE

Eine bevorzugte Ausbildungsform der Photovoltaikanlage mit Reflektorelementen nach der Erfindung wird nachfolgend anhand der schematischen Figuren näher erläutert. Dabei zeigt die:
- **FIGUR 1**: eine perspektivische Ausschnittansicht der Photovoltaikanlage nach der Erfindung,
- **FIGUR 2**: eine Seitenansicht der Photovoltaikanlage nach der Erfindung,
- **FIGUR 3**: ein erstes Detail aus **FIGUR 2**,
- **FIGUR 4**: ein zweites Detail aus **FIGUR 2** und
- **FIGUR 5**: eine perspektivische Ansicht der biegesteifen Reflektor- klemmleiste.

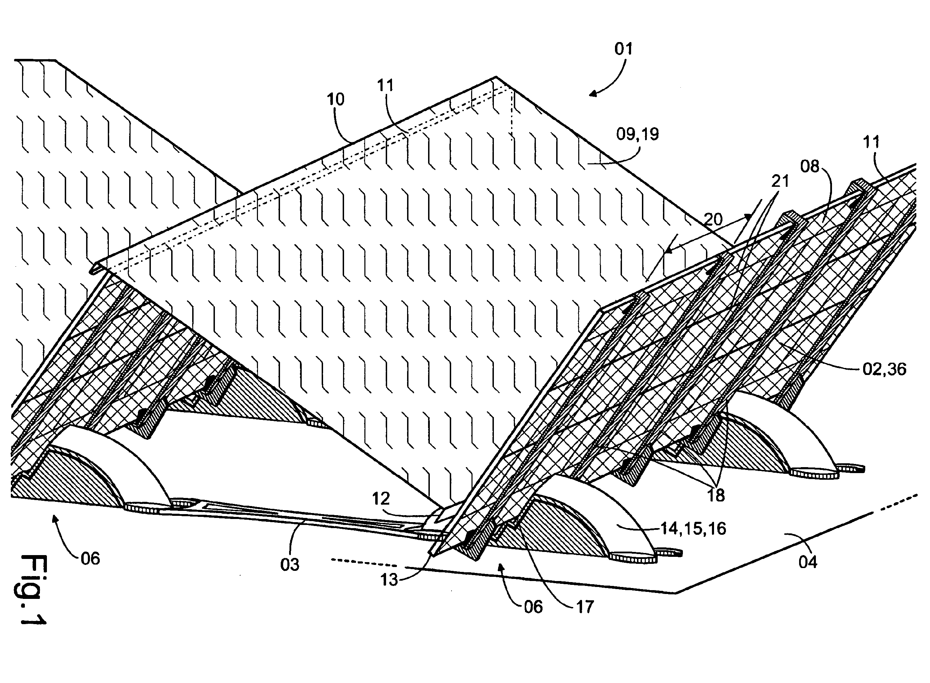

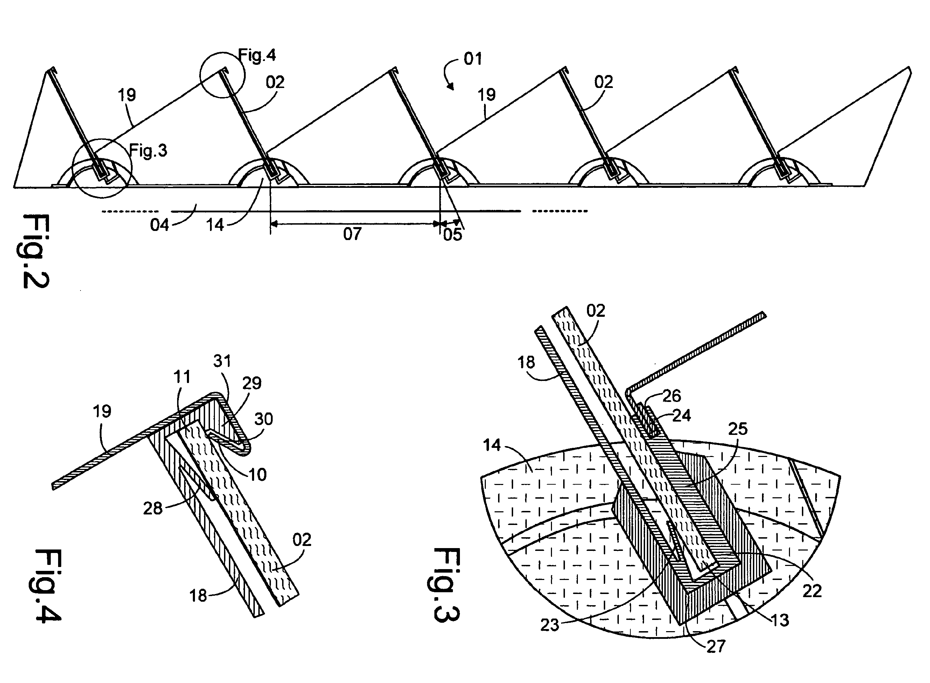

Die **FIGUR 1** zeigt eine Photovoltaikanlage **01** mit länglichen Solarpaneelen **02** beispielsweise rahmenlose Solarlaminate **36**, die mittels Montageschienen **03** auf einem im wesentlichen horizontal ausgerichteten Flachsubstrat **04**, beispielsweise einem Lagerhallendach, unter einem Anstellwinkel **05** und in parallelen Reihen **06** mit einem Abstand **07** (vergleiche **FIGUR 2**) zueinander angeordnet sind. Zwischen den Reihen **06** sind auf der Rückseite **08** der Solarpaneele **02** längliche Reflektorelemente **09** angeordnet. Die Oberkanten **10** der Reflektorelemente **09** sind mit den Oberkanten **11** der Solarpaneele **02** verbunden. Die Unterkanten **12** der Reflektorelemente **09** sind mit den Unterkanten **13** der Solarpaneele **02** verbunden. Es ergibt sich somit ein zick-zackförmiger Verlauf der Reihen **06** von Solarpaneelen **02** und Reflektorelementen **09**, die lückenlos aneinander anschließen, in der seitlichen Betrachtung. Dabei beschatten die Reflektorelemente **09** die Solarpaneele **02** keinesfalls, sondern reflektieren das zwischen die Reihen **06** aus den Solarpaneelen **02** fallende Sonnenlicht optimal auf die Solarpaneele **02**, sodass das von oben einfallende Sonnenlicht optimal genutzt werden kann.

Die Solarpaneele **02** sind im Bereich ihrer Unterkanten **13** einseitig gelagert in Einschubelementen **14** in Form von kompakten, einstückigen Formelementen **15** mit einer geschlossenen Oberfläche **16**, die von einem unter dem vorgegebenen Anstellwinkel **05** über die gesamte Breite des Formelements **15** verlaufenden Einschubschlitz **17** unterbrochen ist, in dem das mit seiner Unterkante **13** einseitig eingeschobene Solarpaneel **02** durch ein Montageelement aus Kunststoff festgelegt ist (vergleiche DE 10 2008 037 964 A1).

Auf der Rückseite **08** der Solarpaneele **02** sind im gezeigten Ausführungsbeispiel insgesamt fünf vertikale biegesteife Reflektorklemmleisten **18** zur Befestigung der Reflektorelemente **10**, die bei der Erfindung als dünne Reflektorblätter **19** ausgebildet sind, und zur Stabilisierung der einseitig eingespannten Solarpaneele **02** vorgesehen. Die biegesteifen Reflektorklemmleisten **18** sind mit einem Abstand **20** über die längliche Solarpaneele **02** gleichmäßig verteilt und zwischen den Einschubelementen **14** angeordnet. Die biegesteifen Reflektorklemmleisten **18** sind mit mehreren parallelen Verbindungselementen **21** horizontal miteinander verbunden. Deutlich zu erkennen ist die unterstützende Funktion der biegesteifen Reflektorklemmleisten **18** für die nur einseitig eingespannten Solarpaneele **02.** Deren Durchbiegung ist nicht mehr möglich. Gleichzeitig dienen die biegesteifen Reflektorklemmleisten **18** der ausschließlichen Befestigung der Reflektorblätter **19**, die in den nachfolgenden **FIGUREN** näher erläutert wird.

Die **FIGUR 2** zeigt die Photovoltaikanlage **01** in der Seitenansicht. Gut zu erkennen ist der lückenlose, zick-zackförmige Verlauf von Solarpaneelen **02** und Reflektorblättern **19.** Seitenansichtdetails aus dem Bereich der Unterkanten **12**, **13** (**FIGUR 3**) und dem Bereich der Oberkanten **10**, **11** (**FIGUR 4**) von dem Solarpaneel **02** und dem Reflektorblatt **19** werden nachfolgend näher erläutert.

In der **FIGUR 3** ist die biegesteife Reflektorklemmleiste **18** im Bereich der Unterkante **13** des Solarpaneels **02** dargestellt. Zu erkennen ist eine untere doppelte Abwinklung **22** zur Aufnahme des Solarpaneels **02**. Zum losefreien Festlegen des Solarpaneels **02** weist die biegesteife Reflektorklemmleiste **18** in ihrem Innern eine untere Klemmlippe **23** auf. Bei einer Fertigung der biegesteifen Reflektorklemmleiste **18** aus einem Kunststoff ist die untere Klemmlippe **23** entsprechend elastisch ausgeführt. Weiterhin ist in der Stirnseite **24** des unteren Vorderschenkels **25** der unteren doppelten Abwinklung **22** der biegesteifen Reflektorklemmleiste **18**, der die Unterkante **13** des Solarpaneels **02** umgreift, eine Aufnahmenut **26** zur Aufnahme der Unterkante **12** des Reflektorblatts **19** vorgesehen. Zur Verstärkung des Reflektorblatts **19** ist dieses an seiner Unterkante **12** doppelt gefalzt. Weiterhin ist eine Rippenverstärkung **27** im Bereich der unteren doppelten Abwinklung **22** der Reflektorklemmleiste **18** vorgesehen, die eine Stabilisierung der unteren doppelten Abwinklung **22** gegen Aufbiegen durch am Solarpaneel **02** angreifende Windlasten gewährleistet.

Die **FIGUR 4** zeigt die biegesteife Reflektorklemmleiste **18** im Bereich der Oberkante **11** des Solarpaneels **02.** Zu erkennen ist eine obere Klemmlippe **28** zum losefreien Festlegen des Solarpaneels **02** an seiner Oberkante **11**. Weiterhin ist am oberen Vorderschenkel **29** der biegesteifen Reflektorklemmleiste **18** eine innere Abschrägung **30** zur Aufnahme der entsprechend abgewinkelten Oberkante **10** des Reflektorblatts **19** vorgesehen. Alternativ kann das Reflektorblatt **19** auch mit einer entsprechenden Verdickung in eine rückseitige Aufnahmenut auf der biegesteifen Reflektorklemmleiste **18** eingreifen, dies ist aber in der **FIGUR 4** nicht dargestellt. In den gezeigten Ausführungsbeispielen ist das Reflektorblatt **19** aus einem relativ biegesteifen dünnen Metallblech gefertigt. Eine biegeschlaffe, aber gespannte Ausführung beispielsweise aus einer Metall- oder Kunststofffolie ist aber ebenfalls ohne weiteres einsetzbar.

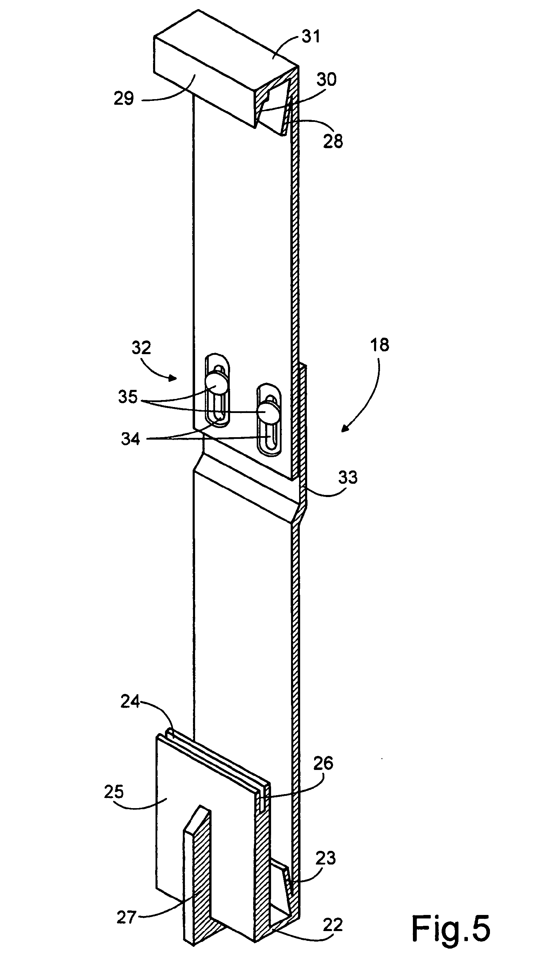

Die **FIGUR 5** zeigt nur die biegesteife Reflektorklemmleiste **18** mit ihren Elementen in perspektivischer Darstellung. Zu erkennen sind die oberen doppelte Abwinklung **31** mit der inneren Abschrägung **30** auf dem oberen Vorderschenkel **29** und die obere Klemmlippe **28.** Im Bereich der unteren doppelten Abwinklung **22** der biegesteifen Reflektorklemmleiste **18** sind die Aufnahmenut **26** auf der Stirnseite **24** des unteren Vorderschenkels **25** und die untere Klemmlippe **23** sowie die Rippenverstärkung **27** dargestellt. Weiterhin ist in **FIGUR 5** die biegesteife Reflektorklemmleiste **18** mit einer Längeneinstellung **32** dargestellt (im gewählten Ausführungsbeispiel einfache Lasche **33** mit Bohrungen **35** und einer Schraubfixierung **36**).

### BEZUGSZEICHENLISTE

- **01**: Photovoltaikanlage mit länglichen
- **02**: Solarpaneele
- **03**: Montageschiene
- **04**: Flachsubstrat
- **05**: Anstellwinkel
- **06**: parallele Reihe aus 02
- **07**: Abstand zwischen 06
- **08**: Rückseite von 02
- **09**: Reflektorelement
- **10**: Oberkante von 09, 19
- **11**: Oberkante von 02
- **12**: Unterkante von 09
- **13**: Unterkante von 02
- **14**: Einschubelement
- **15**: Formelement
- **16**: geschlossene Oberfläche
- **17**: Einschubschlitz für 02
- **18**: biegesteife Reflektorklemmleiste
- **19**: Reflektorblatt
- **20**: Abstand zwischen 18
- **21**: Verbindungselement
- **22**: untere doppelte Abwinklung
- **23**: untere Klemmlippe
- **24**: Stirnseite
- **25**: unterer Vorderschenkel
- **26**: Aufnahmenut
- **27**: Rippenverstärkung
- **28**: obere Klemmlippe
- **29**: oberer Vorderschenkel
- **30**: innere Abschrägung
- **31**: obere doppelte Abwinklung
- **32**: Längeneinstellung
- **33**: Lasche
- **34**: Bohrung
- **35**: Schraubfixierung
- **36**: rahmenloses Solarlaminat

## Patentansprüche

1. Photovoltaikanlage (01) mit länglichen Solarpaneelen (02), die mittels Montageschienen (03) auf einem im wesentlichen horizontal ausgerichteten Flachsubstrat (04) unter einem Anstellwinkel (05) und in parallelen Reihen (06) mit einem Abstand (07) zueinander angeordnet sind, und mit zwischen den Reihen (06) der Solarpaneele (02) rückseitig angeordneten länglichen Reflektorelementen (09) mit einer Verbindung der Oberkante (10) des Reflektorelements (09) mit der Oberkante (11) des Solarpaneels (02) und der Unterkante (12) des Reflektorelements (09) mit der Unterkante (13) des Solarpaneels (02),
**GEKENNZEICHNET DURCH**
eine ausschließlich einseitige Lagerung der Solarpaneele (02) im Bereich ihrer Unterkanten (13) auf den Montageschienen (03) auf dem Flachsubstrat (04) und mehrere biegesteife Reflektorklemmleisten (18) in einer beabstandeten vertikalen Anordnung zwischen den Montageschienen (03) auf der Rückseite (08) der Solarpaneele (02) mit unteren doppelten Abwinklungen (22), die die Solarpaneele (02) an deren Unterkante (13) mit einem unteren Vorderschenkel (25) umgreifen, und mit oberen doppelten Abwinklungen (31), die die Solarpaneele (02) an deren Oberkante (11) mit einem oberen Vorderschenkel (29) umgreifen, wobei die unteren doppelten Abwinklungen (22) und die oberen doppelten Abwinklungen (31) Mittel zur Befestigung der als dünne Reflektorblätter (19) ausgebildeten Reflektorelemente (09) aufweisen.

2. Photovoltaikanlage (01) nach Anspruch 1,
**GEKENNZEICHNET DURCH**
zumindest ein auf der Rückseite (08) der Solarpaneele (02) parallel zu dessen Ober- und Unterkante (11, 13) angeordnetes Verbindungselement (21) der biegesteifen Reflektorklemmleisten (18).

3. Photovoltaikanlage (01) nach Anspruch 1,
**GEKENNZEICHNET DURCH**
**durch** eine Rippenverstärkung (27) der biegesteifen Reflektorklemmleiste (18) zumindest im Bereich der unteren doppelten Abwinklung (22).

4. Photovoltaikanlage (01) nach Anspruch 1,
**GEKENNZEICHNET DURCH**
eine Ausbildung der biegesteifen Reflektorklemmleiste (18) aus einem Kunststoff.

5. Photovoltaikanlage (01) nach Anspruch 4,
**GEKENNZEICHNET DURCH**
**durch** eine untere Klemmlippe (23) innerhalb der unteren doppelten Abwinklung (22) und/oder eine obere Klemmlippe (28) innerhalb der oberen doppelten Abwinklung (31) zur jeweiligen losefreien Festlegung des Solarpaneels (02).

6. Photovoltaikanlage (01) nach Anspruch 1,
**GEKENNZEICHNET DURCH**
eine erste Aufnahmenut (26) in der Stirnseite (24) des unteren Vorderschenkels (25) der unteren doppelten Abwinklung (22) als Mittel zur Aufnahme der Unterkante (12) des Reflektorblatts (19).

7. Photovoltaikanlage (01) nach Anspruch 1,
**GEKENNZEICHNET DURCH**
eine innere Abschrägung (30) des oberen Vorderschenkels (29) der oberen doppelten Abwinklung (31) als Mittel zur Aufnahme der abgewinkelten Oberkante (10) des Reflektorblatts (19).

8. Photovoltaikanlage (01) nach Anspruch 1,
**GEKENNZEICHNET DURCH**
eine zweite Aufnahmenut auf der Rückseite der biegesteifen Reflektorklemmleiste (18) im Bereich ihrer oberen doppelten Abwinklung (31) als Mittel zur Aufnahme der Oberkante (10) des Reflektorblatts (19).

9. Photovoltaikanlage (01) nach Anspruch 1,
**GEKENNZEICHNET DURCH**
eine starre Längeneinstellung (32) der biegesteifen Reflektorklemmleiste (18).

10. Photovoltaikanlage (01) nach Anspruch 1,
**GEKENNZEICHNET DURCH**
eine biegsteife oder biegschlaffe Ausbildung der Reflektorblätter (19).

11. Photovoltaikanlage (01) nach Anspruch 10,
**GEKENNZEICHNET DURCH**
eine Ausbildung der Reflektorblätter (19) als Blech aus einem Metall oder als Platte oder Folie aus einem Kunststoff.

12. Photovoltaikanlage (01) nach Anspruch 1,
**GEKENNZEICHNET DURCH**
eine Ausbildung des Solarpaneels (02) als rahmenloses Solarlaminat (36).

13. Photovoltaikanlage (01) nach Anspruch 1,
**GEKENNZEICHNET DURCH**
eine einseitige Halterung der Solarpaneele (02) in Einschubelementen (14), die in den Montageschienen (03) befestigt sind.

14. Photovoltaikanlage (01) nach Anspruch 1,
**GEKENNZEICHNET DURCH**
eine Ausbildung des Einschubelements (14) als kompaktes, einstückiges Formelement (15) mit einer geschlossenen Oberfläche (16), die von einem unter dem vorgegebenen Anstellwinkel (05) über die gesamte Breite des Formelements (15) verlaufenden Einschubschlitz (17) unterbrochen ist, in dem das mit seiner Unterkante (13) einseitig eingeschobene Solarpaneel (02) **durch** ein Montageelement aus Kunststoff festgelegt ist.

## Claims

1. Photovoltaic plant (01) with longitudinal solar panels (02) which are arranged by means of mounting rails (03) on an essentially horizontally orientated flat substrate (04) at a setting angle (05) and in parallel rows (06) with a spacing (07) from one another, and with longitudinal reflector elements (09) arranged at the rear between the rows (06) of the solar panels (02), with a connection of the upper edge (10) of the reflector element (09) to the upper edge (11) of the solar panel (02) and the lower edge (12) of the reflector element (09) to the lower edge (13) of the solar panel (02),
**characterised by**
an exclusively one-sided mounting of the solar panels (02) in the region of their lower edges (13) on the mounting rails (03) on the flat substrate (04) and a plurality of flexurally resistant reflector clamping strips (18) in a spaced vertical arrangement between the mounting rails (03) on the rear side (08) of the solar panels (02) with lower double angled portions (22) which enclose the solar panels (02) at the lower edge (13) thereof with a lower front arm (25) and with upper double angled portions (31) which enclose the solar panels (02) at the upper edge (11) thereof with an upper front arm (29), wherein the lower double angled portions (22) and the upper double angled portions (31) have means for fastening the reflector elements (09) constructed as thin reflector sheets (19).

2. Photovoltaic plant (01) according to claim 1,
**characterised by**
at least one connecting element (21) of the flexurally resistant reflector clamping strips (18) arranged on the rear side (08) of the solar panels (02) parallel to the upper and lower edges (11, 13) thereof.

3. Photovoltaic plant (01) according to claim 1,
**characterised by**
a reinforcing rib (27) of the flexurally resistant reflector clamping strip (18) at least in the region of the lower double angled portion (22).

4. Photovoltaic plant (01) according to claim 1,
**characterised by**
construction of the flexurally resistant reflector clamping strip (18) from a plastic.

5. Photovoltaic plant (01) according to claim 4,
**characterised by**
a lower clamping lip (23) within the lower double angled portion (22) and/or an upper clamping lip (28) within the upper double angled portion (31) for the respective non-releasable fastening of the solar panel (02).

6. Photovoltaic plant (01) according to claim 1,
**characterised by**
a first accommodating groove (26) in the front face (24) of the lower front arm (25) of the lower double angled portion (22) as means for accommodating the lower edge (12) of the reflector sheet (19).

7. Photovoltaic plant (01) according to claim 1,
**characterised by**
an inner chamfering (30) of the upper front arm (29) of the upper double angled portion (31) as means for accommodating the angled upper edge (10) of the reflector sheet (19).

8. Photovoltaic plant (01) according to claim 1,
**characterised by**
a second accommodating groove on the rear side of the flexurally resistant reflector clamping strip (18) in the region of its upper double angled portion (31) as means for accommodating the upper edge (10) of the reflector sheet (19).

9. Photovoltaic plant (01) according to claim 1,
**characterised by**
a rigid length setting (32) of the flexurally resistant reflector clamping strip (18).

10. Photovoltaic plant (01) according to claim 1,
**characterised by**
a flexurally resistant or flexible construction of the reflector sheets (19).

11. Photovoltaic plant (01) according to claim 10,
**characterised by**
a construction of the reflector sheets (19) as a sheet made from metal or as a plate or film made from a plastic.

12. Photovoltaic plant (01) according to claim 1,
**characterised by**
a construction of the solar panel (02) as a frameless solar laminate (36).

13. Photovoltaic plant (01) according to claim 1,
**characterised by**
a one-sided holding of the solar panels (02) in insertion elements (14) which are fastened in the mounting rails (03).

14. Photovoltaic plant (01) according to claim 1,
**characterised by**
a construction of the insertion element (14) as a compact one-piece shaped element (15) with a closed surface (16) which is interrupted by an insertion slot (17) running at the predetermined setting angle (05) over the entire width of the shaped element (15), in which the solar panel (02), inserted at one side by means of its lower edge (13), is fastened by means of a mounting element made from plastic.

## Revendications

1. Installation photovoltaïque (01) comprenant des panneaux solaires (02) allongés, qui sont disposés au moyen de rails de montage (03) sur un substrat plat (04) orienté sensiblement horizontalement sous un angle d'inclinaison (05) et dans des rangées (06) parallèles avec un espacement (07) entre eux, et des éléments réflecteurs (09) allongés, disposés à l'arrière entre les rangées (06) des panneaux solaires (02) avec une liaison entre l'arête supérieure (10) de l'élément réflecteur (09) et l'arête supérieure (11) du panneau solaire (02) et entre l'arête inférieure (12) de l'élément réflecteur (09) et l'arête inférieure (13) du panneau solaire (02),
**caractérisé par**
une fixation uniquement unilatérale des panneaux solaires (02) dans la zone de leurs arêtes inférieures (13) sur les rails de montage (3) sur le substrat plat (04) et plusieurs baguettes de serrage de réflecteur (18) résistantes à la flexion dans un agencement vertical espacé entre les rails de montage (03) sur la face arrière (08) des panneaux solaires (02) avec des coudes (22) doubles inférieurs, qui entourent les panneaux solaires (02) sur leur arête inférieure (13) avec une branche avant (25) inférieure, et avec des coudes (31) doubles supérieurs, qui entourent les panneaux solaires (02) sur leur arête supérieure (11) avec une branche avant (29) supérieure, les coudes (22) doubles inférieurs et les coudes (31) doubles supérieurs présentant des moyens pour la fixation des éléments réflecteurs (09) conçus comme feuilles de réflecteur (19) minces.

2. Installation photovoltaïque (01) selon la revendication 1,
**caractérisée par**
au moins un élément de liaison (21), disposé sur la face arrière (08) des panneaux solaires (02) parallèlement à son arête supérieure et son arête inférieure (11, 13), des baguettes de serrage de réflecteur (18) résistantes à la flexion.

3. Installation photovoltaïque (01) selon la revendication 1,
**caractérisée par**
un renfort par nervures (27) de la baguette de serrage de réflecteur (18) résistante à la flexion au moins dans la zone du coude (22) double inférieur.

4. Installation photovoltaïque (01) selon la revendication 1,
**caractérisée par**
une réalisation de la baguette de serrage de réflecteur (18) résistante à la flexion à base d'une matière synthétique.

5. Installation photovoltaïque (01) selon la revendication 4,
**caractérisée par**
une lèvre de serrage (23) inférieure à l'intérieur du coude (22) double inférieur et/ou une lèvre de serrage (28) supérieure à l'intérieur du coude (31) double supérieur pour la fixation sans jeu respective du panneau solaire (02).

6. Installation photovoltaïque (01) selon la revendication 1,
**caractérisée par**
une première rainure de logement (26) dans la face avant (24) de la branche avant (25) inférieure du coude (22) double inférieur comme moyen pour le logement de l'arête inférieure (12) de la feuille de réflecteur (19).

7. Installation photovoltaïque (01) selon la revendication 1,
**caractérisée par**
un chanfrein (30) intérieur de la branche avant (29) supérieure du coude (31) double supérieur comme moyen pour le logement de l'arête supérieure (10) coudée de la feuille de réflecteur (19).

8. Installation photovoltaïque (01) selon la revendication 1,
**caractérisée par**
une seconde rainure de logement sur la face arrière de la baguette de serrage de réflecteur (18) résistante à la flexion dans la zone de son coude (31) double supérieur comme moyen pour le logement de l'arête supérieure (10) de la feuille de réflecteur (19).

9. Installation photovoltaïque (01) selon la revendication 1,
**caractérisée par**
un réglage en longueur (32) fixe de la baguette de serrage de réflecteur (18) résistante à la flexion.

10. Installation photovoltaïque (01) selon la revendication 1,
**caractérisée par**
une réalisation résistante à la flexion ou lâche en flexion des feuilles de réflecteur (19).

11. Installation photovoltaïque (01) selon la revendication 10,
**caractérisée par**
une réalisation des feuilles de réflecteur (19) sous forme de tôle à base d'un métal ou de plaque ou film à base d'une matière synthétique.

12. Installation photovoltaïque (01) selon la revendication 1,
**caractérisée par**
une réalisation du panneau solaire (02) sous forme de stratifié solaire (36) sans cadre.

13. Installation photovoltaïque (01) selon la revendication 1,
**caractérisée par**
une fixation unilatérale des panneaux solaires (02) dans des éléments d'introduction (14), qui sont fixés dans les rails de montage (03).

14. Installation photovoltaïque (01) selon la revendication 1,
**caractérisée par**
une réalisation de l'élément d'introduction (14) sous la forme d'élément moulé (15) compact, d'un seul tenant, avec une surface (16) fermée, qui est interrompue par une fente d'introduction (17) agencée sous l'angle d'inclinaison (05) prédéfini sur toute la largeur de l'élément moulé (15), fente dans laquelle le panneau solaire (02) introduit par un côté avec son arête inférieure (13) est fixé par un élément de montage en matière synthétique.
